# EUROPEAN PATENT APPLICATION

(11) **EP 4 775 846 A1**
(43) Date of publication of application: **15.07.2026**
(21) Application number: 25461502.4
(22) Date of filing: 09.01.2025
(51) Int. Cl.: F16F 7/01

(54) **DAMPING STRUCTURE AND THE METHOD OF ITS PRODUCTION**

(71) Applicant: SIEC BADAWCZA LUKASIEWICZ-INSTYTUT LOTNICTWA, 02-256 Warszawa (PL)
(72) Inventor: Wdowinski, Wojciech, 02-232 Warszawa (PL); Moneta, Grzegorz, 02-495 Warszawa (PL); Szalkowski, Sebastian, 02-241 Warszawa (PL); Raczko, Konrad, 02-114 Warszawa (PL); Fedasz, Michal, 00-055 Warszawa (PL); Piecka, Sebastian, 01-105 Warszawa (PL); Cieslak, Slawomir, 20-560 Lublin (PL); Malicki, Maciej, 05-090 Nowe Grocholice (PL); Pilczynski, Jakub, 05-077 Warszawa (PL); Sala, Krzysztof, 05-300 Minsk Mazowiecki (PL); Gibczynski, Tomasz, 02-495 Warszawa (PL)
(74) Representative: Wroblewski, Marcin Jan

(57) **Abstract**

The object of this invention is a damping structure (1) and a method of its production. A damping structure (1) can be applied to components and structures such as, for example, machining tools, antenna boom, gas turbine vanes, and wind turbines.

## Description

### Field of art

The object of this invention is a damping structure and a method of its production. A damping structure can be applied to components and structures such as, for example, machining tools, antenna masts, gas turbine vanes, and wind turbines.

### Prior art

In today's world, various mechanisms are known to damp vibrations occurring in structures. These include material and friction damping mechanisms by interaction of features with each other. Friction damping results in the requirement to add certain features to the system to increase the damping performance, a solution that has its specific negative impact on the performance or life of the features. It is preferable to provide solutions that, with minimal impact on the performance and strength of features, allow a significant increase in damping performance.

Machining tools are known to use various design solutions to damp vibrations, but their effectiveness is limited due to the difficulty of designing and manufacturing complex geometries using traditional manufacturing methods.

A trend is known in the prior art towards the use of damping features in machining tools in the form of dynamic vibration dampers of various shapes, with the shape most often coinciding with that of the machining tool, e.g. a cylinder of suitable mass and material moving an adapted space inside the machining tool.

Polish Patent No. PL227782B1 describes a machining tool containing a vibration damping material, which takes the form of a coating with vibration damping properties. The vibration damping material is a ceramic material containing CNx, arranged into nanodimensional clusters. "X" denotes the nitrogen content of the CNx material, expressed as an atomic percentage ranging from 10% to 50%.

A vibration damping feature in a machining tool holder is known from Polish Patent No. PL238944B1. The vibration damping feature takes the form of one or more recesses, formed in the body of the machining tool holder and filled with a damping material in the form of an elastomer. Said recess has at least one constriction, the geometry of which is described by parameters such as the angle α, which is the angle included between the axis of symmetry of the recess passage and the wall of the constriction, and the radius R of the bottom of the constriction, the angle α being contained between 25° and 30° and the radius R being between 7 mm and 9 mm.

Solutions exist which provide for the creation of voids inside a machining tool to be filled with vibration-damping material. Information on the application of metal powder in tool vibration damping can be found in "Vibration Suppression in Turning TiAl6V4 Using Additively Manufactured Tool Holders with Specially Structured, Particle Filled Hollow Elements" by Florian A. M. Vogel, Sebastian Berger, Ekrem Özkayaa, and Dirk Biermann published in Procedia Manufacturing from the 19th Machining Innovations Conference for Aerospace Industry 2019 (MIC 2019), November 27th 28th 2019, Hanover, Germany. The lattice structures described in the said paper have a closed-cell geometry with no additional free-end rods.

### Technical problem to be solved

The primary problem which this invention is solving is the problem of vibration, which has an extremely negative impact on the stability of operation, durability and strength of structures and tools. In the case of machining tools, unwanted vibrations occur during operation, negatively affecting the machining process. Vibrations affect the quality of machining and result in faster tool wear. There is therefore a need for a design that effectively damps vibrations while extending tool life. The purpose of the invention is to provide a damping structure that would provide effective vibration damping during operation of a damping structure or a structure comprising a damping structure.

### Essence of the invention

In a first aspect, the invention relates to a damping structure comprising an internal damping chamber comprising a powder, preferably a high-density powder, preferably a metal powder. A damping chamber comprises at least one elementary cell comprising sixteen structural rods, wherein:
- the structural rods are of the same length and form a diamond-shape structure, or
- at least one of the sixteen structural rods has a different length from the other structural rods, creating a modified diamond-shape structure.

Alternatively, a high-density powder can be, for example, a ceramic powder or tungsten carbide powder.

Preferably, at least one of the sixteen structural rods in an elementary cell has a different diameter from the other structural rods.

Preferably, an elementary cell comprises a secondary rod, wherein the secondary rod preferably comprises a mass at its free end.

Preferably, a secondary rod extends in an inward direction of a diamond-shape or modified diamond-shape elementary cell, the mass is preferably placed at a height which is between 50% and 75%, and preferably 70%, of the height of the hexahedron in which the elementary cell is included.

Preferably, a vibration damping chamber comprises at least two elementary cells, wherein the lengths and/or diameters of the structural rods of one elementary cell differ from the lengths and/or diameters of the structural rods of the other elementary cell.

Preferably, a vibration damping chamber comprises at least two elementary cells, wherein the lengths and/or diameters of the structural rods of one elementary cell are equal to the lengths and/or diameters of the structural rods of the other elementary cell.

Preferably, the masses at the ends of secondary rods of the different elementary cells are the same or differ from each other, where, preferably, the masses at the ends of secondary rods of the different elementary cells differ from each other.

A damping structure preferably comprises at least two elementary cells that form an lattice structure inside the damping chamber. A damping structure may comprise more than one chamber.

The infilling level of an elementary cell by the solid material of rods is preferably between 3% and 70%, preferably between 10% and 50%, more preferably between 10% and 40%, most preferably between 10% and 20% of the volume of a full hexahedron which includes the elementary cell.

A damping chamber is preferably divided by a wall into at least two compartments.

Elementary cells are preferably arranged in a damping chamber on a matrix plan.

A damping structure is preferably made of steel and/or titanium and/or nickel-based alloy and/or cobalt and/or tungsten and/or aluminium and/or magnesium. For example, a damping structure can be made of tungsten carbide, silumin or ZnAl alloy.

A damping structure preferably comprises at least one evacuation hole for a powder removal.

A damping structure is preferably in the form of a tool, device or structural part of a device, preferably a machining tool, an antenna boom, a gas turbine vane, a wind turbine, a combustion chamber, or an engine exhaust nozzle. A damping structure can be implemented wherever vibrations cause negative effects in the operation of a structure/machine/device and damping the vibration will improve such operation.

In a second aspect, the invention relates to a method of manufacturing a damping structure, wherein the damping structure according to the invention is provided by an additive manufacturing technique from a powder, preferably a high-density powder, preferably a metal powder, wherein successive layers of powder are sintered in such a way that part of the powder is not melted and remains loose inside a damping chamber.

In the crystal lattice of diamond, each carbon atom bonds with four other carbon atoms using covalent bonds to form a basic crystal structure that can be inscribed into a hexahedron. The diamond structure is included in a cube, which is a special and regular type of hexahedron. In this application, sixteen structural rods of an elementary cell form a structure with a shape analogous to that of a diamond. The solution uses either a diamond-type elementary cell shape with equal rod lengths, which can be inscribed into a regular hexahedron, or a modified diamond shape in which at least one or more structural rods are of a different length to the other structural rods and which can be inscribed into a hexahedron which, unlike a regular hexahedron, does not have all sides and/or angles equal. In a preferable embodiment, a special "secondary" rod is added to an elementary cell with a load at the free end of such secondary rod, also known as a mass, which can vibrate. The function of the secondary rod is to break up the glued or welded powder particles in the surrounding. An elementary cell with its modified diamond shape, its proportions and the size of the load at the free end of a secondary rod are key to vibration damping. A single elementary cell preferably features structural rods of dissimilar length and diameter. The loads at the ends of secondary rods in elementary cells preferably vary. This allows the complex volume of a damping chamber to be filled more effectively and a wide spectrum of vibration frequencies to be damped.

The voids between elementary cells are occupied by a loose powder whose function is to move through said voids and "rebound" from the lattice structure's rods. In a preferable embodiment, an additional partitioning of a damping chamber into compartments used allow the creation of more and smaller damping voids, which preferably affects the initiation of the individual chambers. A partitioning into compartments prevents excessive compression of a powder at the bottom of a damping chamber (which would restrain the movement of powder particles), which improves the damping effect during vibration.

A powder which surrounds elementary cell structural rods may be the same material as the damping structure. A solution with evacuation openings so that the original powder can be discharged and replaced with another powdered material is acceptable. It is also possible to use a powder different from the material of the feature without the use of evacuation holes thanks to multi-material additive manufacturing.

Fabrication of damping chambers using additive manufacturing methods and implementing such damping chambers into a damping structure allows, in particular, the simultaneous manufacture of both the structure and its filling, which is not possible with conventional manufacturing methods. By application of 3D printing technologies (for example, Laser Powder Bed Fusion, Selective Laser Melting, Electron Beam Melting, Selective Laser Sintering, or Direct Energy Deposition), it is feasible to design and manufacture complex shapes that are not achievable with conventional methods. Such technologies allow the geometry of a damping structure to be optimised, further enhancing damping efficiency. Moreover, the feasibility of using numerical analyses enables the parameters of a damping structure to be adjusted to manufacture a damping structure for a specific task: for example, a damping structure of stationary and/or rotating turbine machine features, satellite supports (arms), etc. Moreover, the use of multi-material additive manufacturing technologies is acceptable, which can allow filling with a powder material different from the base structure material without the need for additional evacuation openings.

Alternatively, a damping structure can be manufactured by, for example, welding individual structural rods or by die-casting or investment wax casting. The free void is then filled with a powder and the inlet opening is sealed. This is a viable alternative to additive manufacturing.

### Advantages of the invention

The structure according to the invention has the advantage of effectively damping vibrations by providing, inside the structure's volume, a chamber with a special lattice structure based on a diamond-type elementary cell or a modified diamond-type elementary cell that is surrounded by a powder. During operation of a tool, a powder moves through the voids of a chamber and its particles interact with the structural rods of the elementary structure, generating a damping effect on the whole structure.

The solution according to the invention enables the transfer of vibration energy into the entire powder volume, making vibration damping more effective. As a result, during vibration, a significant increase in energy dissipation in the powder is achieved, resulting in improved vibration damping. The solution according to the invention enables significant reduction of the vibration amplitude, first under resonant conditions, thus significantly reducing the risk of failure. A damping structure according to the invention allows an excellent improvement in damping compared to solid parts.

Reducing the vibration of the structure, for example when implemented into a boring tool that is used in machining, directly translates into an increase in the quality of the surface obtained by such machining. The surface quality can be sufficient enough that no additional finishing is required.

A damping structure can be applied to many components and structures such as, for example, machining tools, antenna booms, gas turbine vanes, and wind turbines.

### Description of drawing figures

The invention is illustrated in embodiments shown in the drawing, wherein:
- Fig. 1 -: is a perspective view of a machining tool, being a boring tool;
- Fig. 2 -: is a longitudinal cross-section of a boring tool with visible compartments and lattice structure, with a powder not shown for clarity;
- Fig. 3 -: is a view of a boring tool insert with visible compartments and lattice structure, with a powder not shown for clarity;
- Fig. 4 -: is a longitudinal cross-section of a boring tool insert with visible compartments and lattice structure comprising elementary cells, with a powder not shown for clarity;
- Fig. 5 -: is a diagram of an elementary cell with structural rods and a secondary rod with a load at its free end;
- Fig. 6 -: is a longitudinal cross-section of a cantilever beam with a chamber and lattice infill shown.

### Example 1

As an example of the implementation of the damping structure 1 according to the invention, a machining tool, being a boring tool 1, including a damping chamber 2 containing metal powder, was made. The entire machining tool was made of CoCr powder in a single additive manufacturing process run.

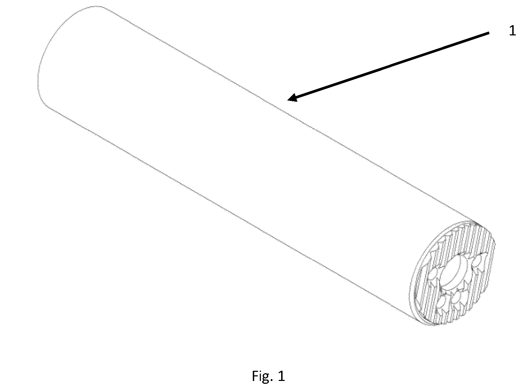

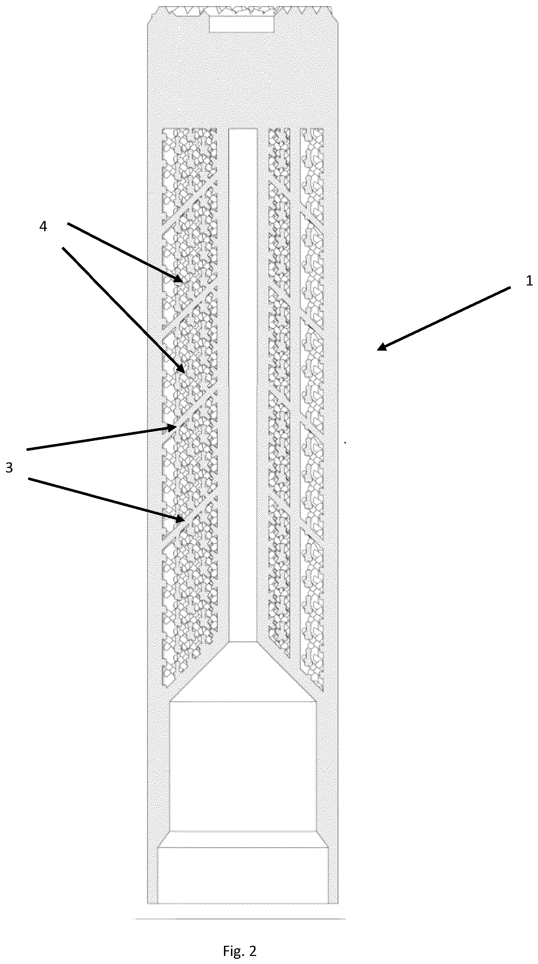

A diagram of the boring tool 1 is shown in Fig. 1, while its internal structure is shown in Fig. 2. The boring tool 1 is adapted for interfacing with fastening features of commercially available lathe knives. The cross-sectional view in Fig. 2 reveals additional partitions of the damping chamber 2 using partitions 3 into smaller voids, which allow forming more vibration damping compartments 4.

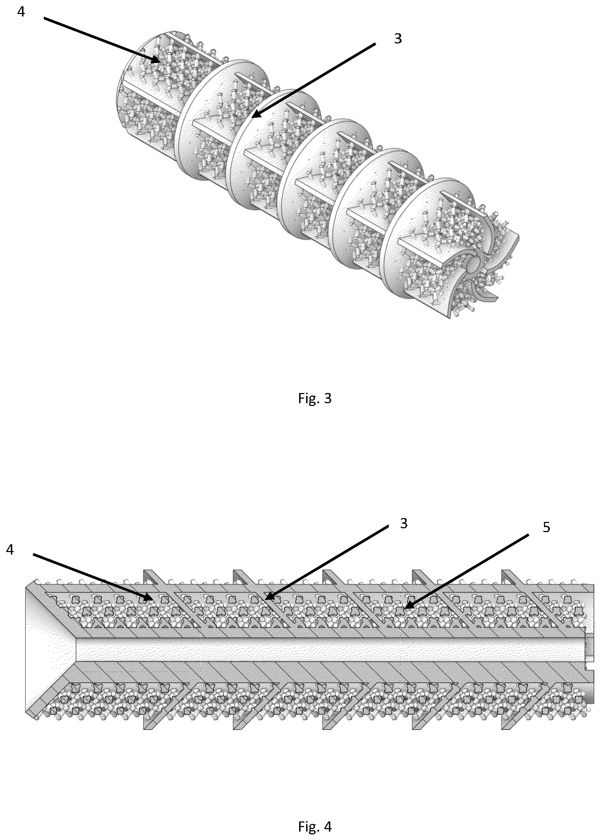

Fig. 3 is a view of the inner insert of the boring tool 1 with the damping chamber 2 and the partitions 3 that divide the chamber 2 into compartments 4. The compartments 4 shown in Fig. 4 reveal an lattice structure comprising elementary cells 5. The non-melted metal powder from a 3D printing process is not shown in Fig. 3 and Fig. 4 for clarity. During operation of the boring tool 1, a powder moves through the voids of the compartments 4 and its particles interact with the structural rods 6 and 7 of the elementary cells 5, generating a damping effect on the whole boring tool.

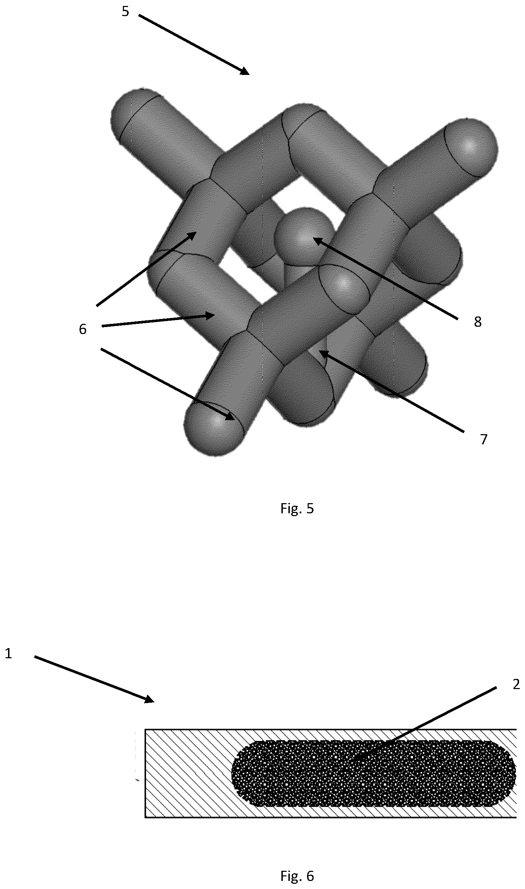

A single elementary cell 5 with sixteen structural rods 6, forming a modified diamond-shape structure, and one secondary rod 7 with a ball-shaped mass 8 at its end are shown in Fig. 5. In other embodiments, the load 8 can take the shape of other geometric solids. The secondary rod 7 extends inwards from the elementary cell 5 with a modified diamond shape. The function of the secondary rod 7 is to break up the welded metal powder particles that surround it. The load 8 is placed at a height that is approximately 70% of the height of the hexahedron which includes the elementary cell 5. The secondary rod 7 with the load 8 at its free end preferably has the greatest possible length, which does not cause it to collide with the structural rods 6 during vibration. Hence, the secondary rod 7 can move on the longest arc, breaking up the most powder.

The structural rods 6 within one elementary cell 5 have different lengths to fill the void of the damping chamber 2 more effectively. The lengths and diameters of the rods 6 and 7 of the elementary cells 5 are repeatable in all elementary cells 5. The masses of the loads 8 at the ends of the secondary rods 7 of the elementary cells 5 are identical. Alternatively, the lengths and diameters of the structural rods 6 and 7 and the loads 8 of the secondary rods 7 of the elementary cells 5 may vary between the individual elementary cells. The elementary cells 5 are arranged in a damping chamber 2 in a way which is axially repeatable in cycles. In another embodiment, the matrix plan may be different, as it depends on the shape of the structure 1 and the damping chamber 2.

The thickness of the structural rods 6 and 7, determined by the fill level of the elementary cell 5 by the solid material of structural rods 6 and 7 is 10% of the volume of a full hexahedron which includes the elementary cell 5. Alternatively, the thickness of the structural rods 6 and 7 can be between 3% and 70%, for example 5% or 15% or 20% or 25% of the volume of a full hexahedron which includes the elementary cell 5.

The dimensions of the elementary cell 5 are as follows: diameter of the structural rod 6 = 0.5 mm, diameter of the secondary rod 7 = 0.4 mm, diameter of the ball-shaped load 8 on the secondary rod 7 = 0.5 mm, lengths of the structural rods 6 and 7 are from 0.55 mm to 1.85 mm, the size of the elementary cell 5 (the height of the hexahedron which includes the elementary cell 5) = 2.75 mm.

The boring tool 1 was manufactured using an additive manufacturing technique and a CoCr powder, with successive layers of the powder being sintered in such a way that part of the powder did not melt and remained loose in the damping chamber 2. In the solution according to the invention, the damping chamber 2 is provided directly in the boring tool 1, which makes it possible to use any tool holder suitable for the said boring tool 1.

The damping structure of the boring tool 1 described in the embodiment provided an 18-times reduction in vibration amplitude compared to its solid form counterpart.

### Example 2

A damping structure in the form of a cantilever beam 1 was fabricated. Fig. 6 shows a longitudinal cross-section of the beam 1 with the damping chamber 2 shown, containing elemental cells 5 of a modified diamond shape with the secondary rod 7 and the load 8 at its free end. In this embodiment, the damping chamber 2 is not divided into compartments 4. The elementary cell 5 has the dimensions (lengths and diameters of the structural rods 6 and 7, diameters of the loads 8, and the size of the element cell 5) as described in Example 1.

The cantilever beam 1 was produced with the method specified in Example 1. The damping structure of the cantilever beam 1 described in the embodiment provided an 35-times reduction in vibration amplitude compared to its solid form counterpart.

The sizes of the individual structural rods 6 and 7 (their diameters, lengths, and the weight of the loads 8) depend on the size of the elementary cell 5, the material used and the implementation location of the damping chamber 2. Less implementation space results in a smaller elementary cell 5, while more implementation space enables the use of a damping structure 1 with larger elementary cells 5, wherein, for example, the size of the elementary cell 5 is 30 mm, the diameters of the structural rods 6 are 4 mm, and the lengths of the structural rods 6 are between 8 mm and 17 mm.

### Legend

1 - damping structure
2 - damping chamber
3 - wall
4 - compartment
5 - elementary cell
6 - structural rod, forming a diamond-shaped or modified diamond-shaped structure
7 - secondary rod
8 - load also known as a mass

## Claims

1. A damping structure (1) comprising an internal damping chamber (2) comprising a powder, preferably a high-density powder, preferably a metal powder, **characterised in that** the damping chamber (2) comprises at least one elementary cell (5) comprising sixteen structural rods (6), wherein:
- structural rods (6) are of the same length and form a diamond-shape structure, or
- at least one of sixteen structural rods (6) has a different length from the other structural rods (6), creating a modified diamond-shape structure.

2. A damping structure (1) according to claim 1, **characterised in that** at least one of the sixteen structural rods (6) in the elementary cell (5) has a different diameter from the other structural rods (6).

3. A damping structure according to claim 1 or 2, **characterised in that** an elementary cell (5) comprises a secondary rod (7), wherein the secondary rod (7) preferably comprises a mass (8) at its free end.

4. A damping structure according to claim 3, **characterised in that** the secondary rod (7) extends in an inward direction of a diamond-shape or modified diamond-shape elementary cell (5), where the mass (8) is preferably placed at a height which is between 50% and 75%, and preferably 70%, of the height of the hexahedron in which the elementary cell (5) is included.

5. A damping structure according to any of claims 1 to 4, **characterised in that** a damping chamber (2) comprises at least two elementary cells (5), where the lengths and/or diameters of structural rods (6, 7) of one elementary cell (5) differ from the lengths and/or diameters of structural rods (6, 7) of the other elementary cell (5).

6. A damping structure according to any of claims 1 to 4, **characterised in that** a damping chamber (2) comprises at least two elementary rods (5), where the lengths and/or diameters of structural rods (6, 7) of one elementary cell (5) are equal to the lengths and/or diameters of structural rods (6, 7) of the other elementary cell (5).

7. A damping structure according to any of claims 3 to 6, **characterised in that** the masses (8) at the ends of secondary rods (7) of the different elementary cells (5) are the same or differ from each other, where, the masses (8) at the ends of secondary rods (7) of the different elementary cells (5) preferably differ from each other.

8. A damping structure according to any preceding claim, **characterised in that** it comprises at least two elementary cells (5) which form an lattice structure inside a damping chamber (2).

9. A damping structure according to any preceding claim, **characterised in that** the fill level of an elementary cell (5) by a solid material of rods (6, 7) is between 3% and 70%, preferably between 10% and 50%, more preferably between 10% and 40%, most preferably between 10% and 20% of the volume of a full hexahedron which includes the elementary cell (5).

10. A damping structure according to any preceding claim, **characterised in that** a damping chamber (2) is divided by a wall (3) into at least two compartments (4).

11. A damping structure according to any preceding claim, **characterised in that** elementary cells (5) are arranged in a damping chamber (2) in a matrix plan.

12. A damping structure according to any preceding claim, **characterised in that** it is made of steel and/or titanium and/or nickel-based alloy and/or cobalt and/or tungsten and/or aluminium and/or magnesium alloy.

13. A damping structure according to any preceding claim, **characterised in that** it comprises at least one evacuation hole for a powder removal.

14. A damping structure according to any preceding claim, **characterised in that** it is in the form of a tool, device or structural part of a device, preferably a machining tool, an antenna boom, a gas turbine vane, a wind turbine, a combustion chamber, or an engine exhaust nozzle.

15. A method for the manufacturing of a damping structure according to any of claims 1 to 14, **characterised in that** a damping structure (1) is provided by an additive manufacturing technique from a powder, preferably a high-density powder, preferably a metal powder, wherein successive layers of powder are sintered in such a way that part of the powder is not melted and remains loose inside a damping chamber (2).

## Amended claims

### Amended claims in accordance with Rule 137(2) EPC.

1. A damping structure (1) comprising an internal damping chamber (2) comprising a powder, preferably a high-density powder, preferably a metal powder, wherein the damping chamber (2) comprises at least one elementary cell (5) comprising sixteen structural rods (6), wherein:
- structural rods (6) are of the same length and form a diamond-shape structure, or
- at least one of sixteen structural rods (6) has a different length from the other structural rods (6), creating a modified diamond-shape structure,
wherein an elementary cell (5) comprises a secondary rod (7), wherein the secondary rod (7) preferably comprises a mass (8) at its free end,
the damping structure (1) is **characterised in that**:
- the secondary rod (7) extends in an inward direction of a diamond-shape or modified diamond-shape elementary cell (5), where a mass (8) is preferably placed at a height which is between 50% and 75%, and preferably 70%, of the height of the hexahedron in which the elementary cell (5) is included.

2. A damping structure (1) according to claim 1, **characterised in that** at least one of the sixteen structural rods (6) in the elementary cell (5) has a different diameter from the other structural rods (6).

3. A damping structure according to claim 1 or 2, **characterised in that** a damping chamber (2) comprises at least two elementary cells (5), where the lengths and/or diameters of structural rods (6, 7) of one elementary cell (5) differ from the lengths and/or diameters of structural rods (6, 7) of the other elementary cell (5).

4. A damping structure according to claim 1 or 2, **characterised in that** a damping chamber (2) comprises at least two elementary rods (5), where the lengths and/or diameters of structural rods (6, 7) of one elementary cell (5) are equal to the lengths and/or diameters of structural rods (6, 7) of the other elementary cell (5).

5. A damping structure according to any of claims-1 to 4, **characterised in that** masses (8) at the ends of secondary rods (7) of the different elementary cells (5) are the same or differ from each other, where, masses (8) at the ends of secondary rods (7) of the different elementary cells (5) preferably differ from each other.

6. A damping structure according to any preceding claim, **characterised in that** it comprises at least two elementary cells (5) which form an lattice structure inside a damping chamber (2).

7. A damping structure according to any preceding claim, **characterised in that** the fill level of an elementary cell (5) by a solid material of rods (6, 7) is between 3% and 70%, preferably between 10% and 50%, more preferably between 10% and 40%, most preferably between 10% and 20% of the volume of a full hexahedron which includes the elementary cell (5).

8. A damping structure according to any preceding claim, **characterised in that** a damping chamber (2) is divided by a wall (3) into at least two compartments (4).

9. A damping structure according to any preceding claim, **characterised in that** elementary cells (5) are arranged in a damping chamber (2) in a matrix plan.

10. A damping structure according to any preceding claim, **characterised in that** it is made of steel and/or titanium and/or nickel-based alloy and/or cobalt and/or tungsten and/or aluminium and/or magnesium alloy.

11. A damping structure according to any preceding claim, **characterised in that** it comprises at least one evacuation hole for a powder removal.

12. A damping structure according to any preceding claim, **characterised in that** it is in the form of a tool, device or structural part of a device, preferably a machining tool, an antenna boom, a gas turbine vane, a wind turbine, a combustion chamber, or an engine exhaust nozzle.

13. A method for the manufacturing of a damping structure according to any of claims 1 to 12, **characterised in that** a damping structure (1) is provided by an additive manufacturing technique from a powder, preferably a high-density powder, preferably a metal powder, wherein successive layers of powder are sintered in such a way that part of the powder is not melted and remains loose inside a damping chamber (2).
